# EUROPEAN PATENT SPECIFICATION

(11) **EP 0 877 882 B1**
(45) Date of publication and mention of the grant of the patent: **22.05.2002**
(21) Application number: 97901645.8
(22) Date of filing: 28.01.1997
(51) Int. Cl.: F16K 3/03

(54) **FLOW RATE CONTROL ELEMENT FOR DUCTS**
DURCHFLUSSREGELELEMENT FÜR DURCHFLUSSKANÄLE
ELEMENT DE REGULATION DU DEBIT POUR DES CONDUITS

(30) Priority: 02.02.1996 FI 960480
(43) Date of publication of application: 18.11.1998
(73) Proprietor: ABB FLÄKT OY, 37801 Toijala (FI)
(72) Inventor: HUHTALA, Raimo, FIN-37800 Toijala (FI)
(74) Representative: Heinänen, Pekka Antero
(86) International application number: FI9700042
(87) International publication number: WO9728390

(56) References cited:
- EP-A- 0 702 178
- SE-A- 9 300 800
- US-A- 4 094 492

## Description

The present invention relates to a flow rate control element for ducts, said control element operating based on the iris-diaphragm principle and including an annular housing comprised of a base part with a cover part made to fit thereon, and said housing having therein adapted essentially curved leaves, which are pivotally connected at their one ends to said housing, and further including a control ring having radial slots made thereto in which slots the other ends of the leaves are adapted to move, whereby said leaves are made steplessly rotatable between their closed and open positions by turning the control ring.

The flow to be restricted by the control element may be a fluid flow such as air, for instance. In the control of fluid flow, different kinds of adjustment means are used for measurement and control of air flow rate. The simplest control device is a control damper placed inside the duct so that rotation of the damper plate can control and thus adjust the air flow rate through the duct. However, one drawback of such a control is that the direction of air flow at the control varies according to the position of the control element.

From FI patent specification 50,184 is known a generic flow-rate control device of the iris-diaphragm-type having an annular housing comprised of two superimposed halves formed into a base part and a cover part. Between these is adapted a rotatable control ring. The control blades or leaves are pivotally connected at their one ends to pivot pins attached to the base part of the control device housing. The other ends of the leaves are provided with pins adapted to slide in radial slots made to the control ring surface. Thus, rotation of the control ring forces the iris-diaphragm opening formed by the leaves to open and close.

In this construction, the attachment of the leaves to the control element housing is implemented by riveting, which has the benefit of good pivotability and assured fixing of the leaves. A disadvantage of the construction, however, is that both the cover and base parts of the control device housing are perforated by the holes of the rivets, which may cause air leaks through the flow rate control device.

It is an object of the present invention to provide such a flow rate control device based on the iris-diaphragm constriction principle that is free from air leaks in the control device. The invention is characterized in that, for each leaf to be installed, in one part of the housing, advantageously the base part, is formed a nonpenetrating indent or outdent, respectively, whereby to that side of the leaf to be installed facing said indented or outdented side is formed an essentially complementarily shaped outdent or indent, whereby the pivotal cooperation of the outdent/indent pair permits unobstructed rotation of the leaf about its pivot point. This arrangement offers significant benefits over the prior art by dispensing with the need for making holes into the housing for fixing the leaves. Furthermore, at least in smaller control devices it is possible to simply insert the leaves in place, whereby the assembly work is speeded and simplified thus offering significant cost savings.

A preferred embodiment of the invention in characterized in that to both ends of the iris leaf are formed mutually compatible outdents or indents, respectively, so that one end of the leaf has an outdent while the other end has a complementary indent which outdents/indents are mirrored on the other side of the leaf. This arrangement has the benefit that the "symmetry" of the leaf faces permits face-independent installation of the leaves.

Another preferred embodiment of the invention is characterized in that, in both the leaf and the housing, the outdent is shaped essentially hemispherical, while the indent is correspondingly the complementary shape thereof. By virtue of this shape, the leaf functions reliably without having any leak problems.

A still another preferred embodiment of the invention is characterized in that the indents made to the housing are formed flat at their bottoms and that the top surface of the outdent made to the leaves, which is to face the flat bottom of the indent, is correspondingly flat, too. This shaping of the outdents/indents is advantageously used in larger flow rate control devices in which the leaves are secured in place by some means. Then, after the leaf is mounted in place, the pivotal joint is compressed with the help of a special tool to form a pivotal joint known as the "toc-lok" joint in the art. A further benefit of this embodiment over the prior art is that the control device housing need not be punched for mounting holes of the iris-diaphragm leaves.

In the following, the invention will be described in greater detail with reference to the appended drawings in which
Figure 1 shows a section of a flow duct having the iris-diaphragm-type flow rate control device installed thereto;
Figure 2 shows a top view of the base part of the iris-diaphragm flow rate control device housing with the iris leaves installed in place;
Figure 3 shows the structure of Fig. 1 as seen from the right side of the diagram of Fig. 1;
Figure 4 shows the top view of an iris leaf according to the invention;
Figure 5 shows the same leaf in a side view;
Figure 6 shows a cross section of an outdent/indent made to the iris leaf;
Figure 7 shows a side view of the base part of the iris-diaphragm control device according to the invention;
Figure 8 shows a cross section of the edge of the base part illustrated in Fig. 7;
Figure 9 shows a control ring suitable to be placed on the leaf set illustrated in Fig. 2;
Figure 10 shows a side view of the cover part of the iris-diaphragm control device;
Figure 11 shows a sectional view of the cover part edge;
Figure 12 shows a side view of the iris-diaphragm leaf of another embodiment according to the invention;
Figure 13 shows a sectional view of the left edge of the leaf illustrated in Fig. 12; and
Figure 14 shows a sectional view of the base part of another embodiment according to the invention.

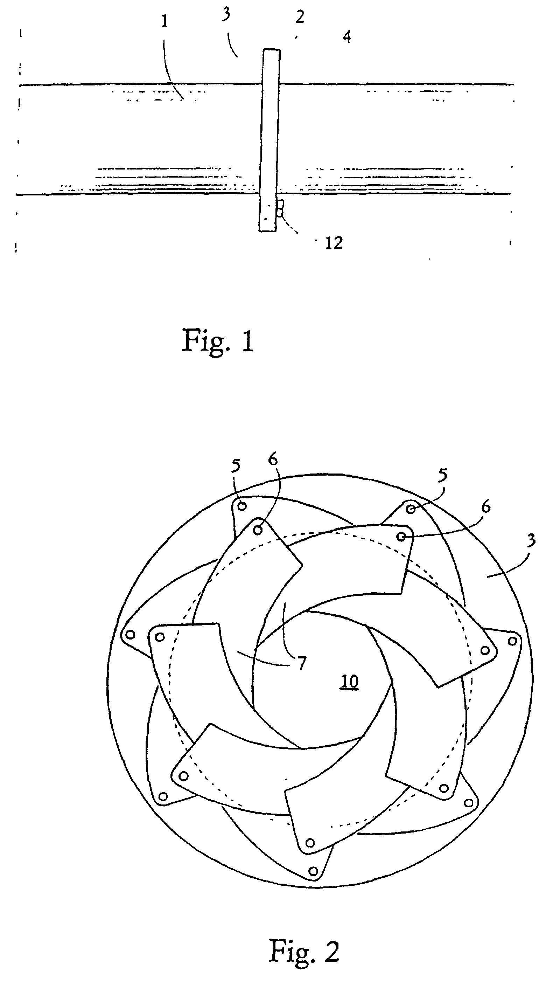

Referring to Fig. 1, the flow rate control device according to the invention shown therein mounted on a duct 1 is an iris-diaphragm flow control device installed inside an annular housing 2. The housing is comprised of two superimposed halves, namely, a base part 3 and a cover part 4. Additionally shown in the diagram of Fig. 1 is a control nut 12 for the adjustment of the iris-diaphragm opening, whereby the flow through the device can be set by turning the nut.

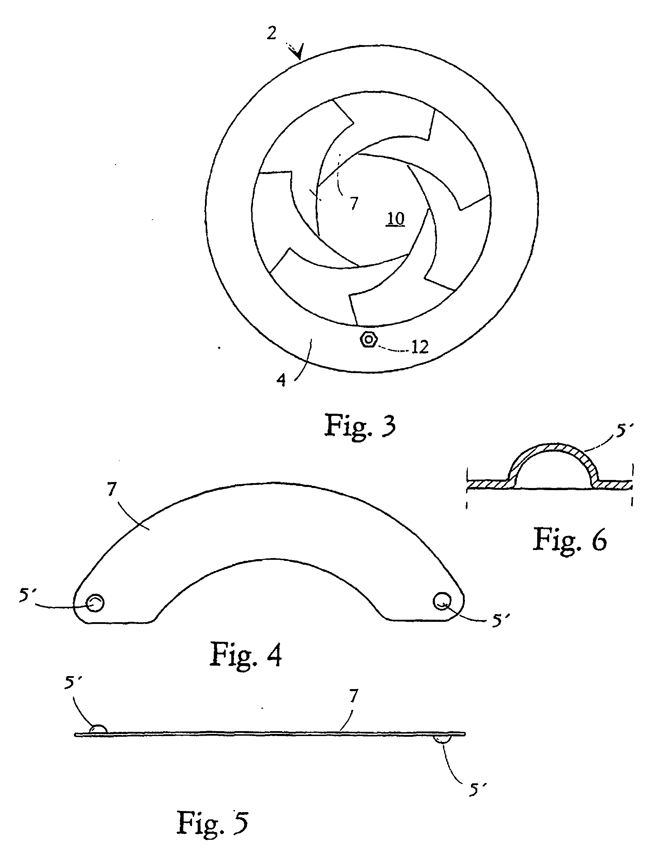

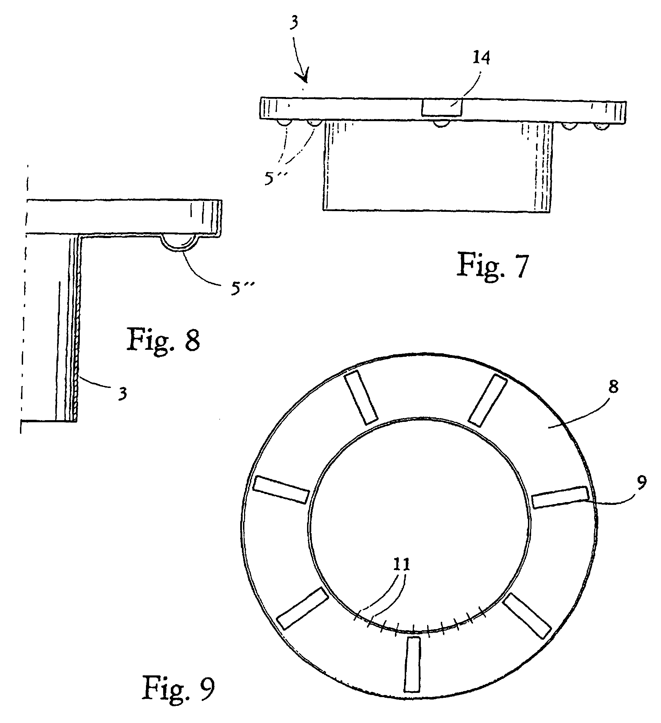

Referring to Fig. 2, therein the base part 3 is shown in a scale much enlarged from that of Fig. 1 and now viewed from the right side with respect to Fig. 1. At points indicated by reference numeral 5, to the bottom of the base part are pivotally connected one ends of curved leaves 7. The other ends of the leaves 7, or members attached thereto, are adapted at the points indicated by reference numeral 6 to slide in slots 9 made to the surface of a control ring 8 (Fig. 9), which is placed over the leaves, so as to extend radially over the ring. The control ring 8 is an annular ring having its inner diameter made equal to that of the ductwork channel. When the control ring 8 is rotated in a conventional manner circumferentially with respect to the housing 2, the leaves are moved toward the open or closed position depending on the direction of control ring rotation. Accordingly, the variable-diameter iris opening 10 formed by the curved leaves can be thus made larger or smaller. In their one end position, the leaves 7 are entirely moved under the control ring 8, whereby the iris opening 10 is essentially as large as the inner diameter of the duct. Correspondingly, in the other end position the leaves 7 close the iris opening 10 entirely or at least essentially.

The novel and essential properties of the invention lie in the structure of the pivotal joint between leaves and the bottom part. In Figs. 4-6 is shown the shape of a leaf fulfilling the specifications of an embodiment of the invention. To both ends of the leaf are formed, e.g., by pressing an indent/outdent so that the projection formed to one end is mirrored at the other end of the leaf. Thus, while one end of the leaf has an indent on the leaf face, the other end of the leaf has an outdent on the opposite face. Obviously, these shapes are reversed on the other side of the leaf. Advantageously, the shape of the indent/outdent 5' is a hemisphere. In Figs. 7 and 8 is shown the base part 3 of an iris-diaphragm control device according to the invention, said part having outdents/indents 5" of complementary shape made thereto in a similar manner as those of the leaves. The laying of the leaves 7 onto the base part 3 occurs simply by aligning the outdent 5' of each leaf 7 on the corresponding indent 5" of the base part 3. Thus, the leaves need not be fixed by any means nor any penetrating holes be made to the base part 3 that could cause detrimental paths of bypass leaks. Since the leaves are "symmetrical" with respect to their faces, the assembly work can be carried out without paying attention to the correct alignment of the leaves, thus permitting the leaf face to aligned either way. Hence, the assembly work is speeded. Obviously, the leaf form must be such that their complementary projecting shapes are always superimposed, which is a natural precondition for the leaves to stay in place.

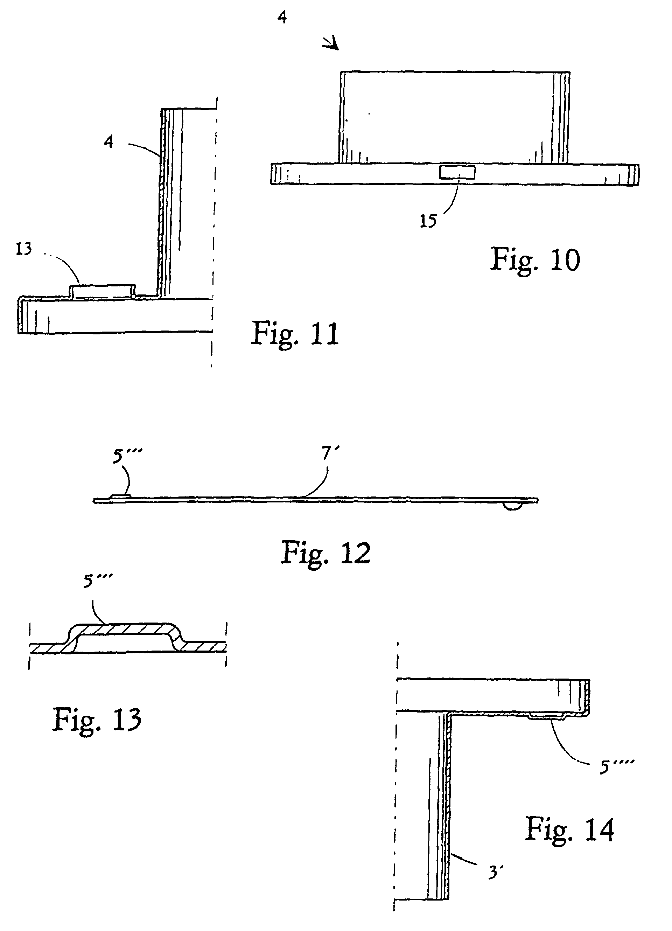

After the leaves are laid in place, the control ring 8 is lowered in a conventional manner over the leaves 7 so that those outdents of the leaves that are not inserted in the indents of the base part 3 will now be inserted in the slots of the control ring 8 in the manner described above. The inner perimeter of the control ring 8 is provided with toothing 11 (openings) with a shape to accommodate the meshing of a gearwheel mounted on the cover part 4 when the cover part placed onto the base part. The cover part gearwheel is in turn connected via a shaft passing through the wall of the housing with an adjustment nut 12 located on the outer surface of the cover part, whereby the rotation of the nut gears the rotation of the control ring 8 to achieve the adjustment of the flow rate through the device. For this adjustment arrangement, the wall of the cover part 4 has a pass-through hole 13 (Fig. 11) made thereto. The outer perimeter of the control ring carries a graduation (not shown in the diagrams), and outer perimeters of the base part 3 and the cover part 4 are correspondingly provided with windowed openings 14, 15 through which the graduation is visible to the user thus facilitating correct adjustment of the flow rate. The window material may be, e.g., transparent plastic.

Figs. 12-14 show an alternative embodiment of the invention having the indents 5"" of the housing (on the bottom part 3') made flat at their bottoms, and respectively, whereby also the surface of the complementary outdents 5"' of the leaf 7', which is intended to fit against the flat bottom of the indent 5'''', will be flat. After the leaves are laid in place, each abutting pair of outdent and indent is pressed by means of a special tool to deform the outdent/indent pair into a loose, pivotal joint called the toc-lok joint, which locks the leaf inseparably to the base part simultaneously permitting the leaf to rotate in its plane. This embodiment is particularly suited for control devices of larger size.

To a person versed in the art, it is obvious that the different embodiments of the invention are not limited to the above-described exemplifying embodiment, but rather may be varied within the scope of the annexed claims. Thus, the exact shape and dimensioning of the indents and outdents can be varied widely from those of the exemplifying embodiments described above. The essential property of the joint between the iris-diaphragm leaf and the base part is that no penetrating fixing means are required on the base part.

## Claims

1. A flow rate control element for ducts, said control element operating based on the iris-diaphragm principle and including an annular housing (2) comprised of a base part (3) with a cover part (4) made to fit thereon, and said housing having therein adapted essentially curved leaves (7, 7'), which are pivotally connected at their one ends to said housing, and further including a control ring (8) having radial slots (9) made thereto in which slots the other ends of the leaves are adapted to move, whereby said leaves are made steplessly rotatable between their closed and open positions by turning the control ring, **characterized in that**, for each leaf (7, 7') to be installed, in one part of the housing (2), advantageously the base part (3), is formed a nonpenetrating indent or outdent (5'', 5''''), respectively, whereby to that side of the leaf to be installed facing said indented or outdented side is formed an essentially complementarily shaped outdent or indent (5', 5"'), whereby the pivotal cooperation of the outdent/indent pair permits unobstructed rotation of the leaf about its pivot point.

2. A flow rate control element as defined in claim 1, **characterized in that** to both ends of the iris leaf (7) are formed mutually compatible outdents or indents (5'), respectively, so that one of the leaf has an outdent while the other end has a complementary indent, which outdents/indents are mirrored on the other side of the leaf.

3. A flow rate control element as defined in claim 1 or 2, **characterized in that**, in both the leaf (7) and the housing (2), the outdent is shaped essentially hemispherical, while the indent correspondingly is the complementary shape thereof.

4. A flow rate control element as defined in claim 1, **characterized in that** the indents (5'''') made to the housing are formed flat at their bottoms and that the top surface of the outdents (5''') made to the leaf (7), which are to face the flat bottom of the indent, are correspondingly flat.

5. A flow rate control element as defined in claim 4, **characterized in that**, after the leaf (7') is laid in place, the abutting pair of the outdent (5''') and the indent (5'''') is pressed by means of a special tool to deform the outdent/indent pair into a loose, pivotal joint called the toc-lok joint, which locks the leaf inseparably to the base part simultaneously permitting the leaf to rotate in its plane.

6. A flow rate control element as defined in claim 1, **characterized in that** the outer perimeter of the control ring (8) carries a graduation, and the outer perimeters of the base part (3) and the cover part (4), respectively, coinciding with the graduation, are correspondingly provided with a windowed opening (14, 15) which is of a transparent material such as transparent plastic.

## Patentansprüche

1. Durchflussregelelement für Durchflusskanäle, welches nach dem Iris-Diaphragma-Prinzip arbeitet und ein ringförmiges Gehäuse (2) einschließt, das ein Grundteil (3) mit einem daran passenden Hüllenteil (4) aufweist, wobei das Gehäuse darin angepasste, deutlich gekrümmte Blätter (7, 7') besitzt, die an ihren einen Enden mit dem Gehäuse schwenkbar verbunden sind, und außerdem einschließend einen Steuerring (8) mit darin angebrachten radialen Schlitzen (9), in welchen Schlitzen die anderen Enden der Blätter zum Bewegen angepasst sind, während die Blätter durch Drehen des Steuerrings stufenlos zwischen ihren geschlossenen und offenen Stellungen rotierbar sind,
**dadurch gekennzeichnet,**
**dass** für jedes zu installierende Blatt (7, 7') in einem Teil des Gehäuses (2), bevorzugt auf dem Grundteil (3), eine nicht durchgehende Einkerbung oder ein Vorsprung (5", 5'''') ausgebildet ist, während auf derjenigen Seite des zu installierenden Blattes, die der eingekerbten oder mit dem Vorsprung versehenen Seite gegenüber liegt, ein im Wesentlichen komplementär geformter Vorsprung oder eine Einkerbung (5', 5''') ausgebildet ist, wobei die Schwenkzusammenwirkung des Vorsprungs/Einkerbungs-Paares eine unbehinderte Drehung des Blattes um seinen Schwenkpunkt erlaubt.

2. Durchflussregelelement nach Anspruch 1,
**dadurch gekennzeichnet,**
**dass** auf beiden Enden des Iris-Blattes (7) gegenseitig kompatible Vorsprünge oder Einkerbungen (5') ausgebildet sind, so dass eines der Blätter einen Vorsprung und das andere Ende eine komplementäre Einkerbung besitzt, welche Vorsprünge/Einkerbungen auf der anderen Seite des Blattes spiegelbildlich vorgesehen sind.

3. Durchflussregelelement nach Anspruch 1 oder 2,
**dadurch gekennzeichnet,**
**dass** sowohl im Blatt (7) als auch im Gehäuse (2) der Vorsprung im Wesentlichen hemisphärisch geformt ist, während die Einkerbung dementsprechend von dazu komplementärer Form ist.

4. Durchflussregelelement nach Anspruch 1,
**dadurch gekennzeichnet,**
**dass** die in dem Gehäuse erzeugten Einkerbungen (5'''') auf ihrem Boden flach ausgebildet sind und **dass** die Scheiteloberfläche der auf dem Blatt (7) erzeugten Vorsprünge (5'''), welche dem flachen Boden der Einkerbung gegenüber liegen, dementsprechend flach sind.

5. Durchflussregelelement nach Anspruch 4,
**dadurch gekennzeichnet,**
**dass,** nachdem das Blatt (7') an seine Stelle gelegt ist, das anstoßende Paar aus Vorsprung (5''') und Einkerbung (5'''') mittels eines Spezialwerkzeuges gepresst wird, um das Vorsprungs/Einkerbungs-Paar in eine lose, schwenkbare Verbindung zu deformieren, die "Toc-lok-Verbindung" genannt wird, welche Verbindung das Blatt untrennbar mit dem Grundteil verbindet und gleichzeitig dem Blatt das Rotieren in seiner Ebene erlaubt.

6. Durchflussregelelement nach Anspruch 1,
**dadurch gekennzeichnet,**
**dass** der äußere Umfang des Steuerrings (8) einen Einschnitt trägt, und **dass** der äußere Umfang des Grundteils (3) und des Hüllenteils (4) sich mit dem Einschnitt decken und beide mit einer fensterartigen Öffnung (14, 15) ausgerüstet sind, die aus transparentem Material wie beispielsweise transparentem Kunststoff ist.

## Revendications

1. Un élément de régulation du débit pour conduits, ledit élément de régulation opérant sur la base du principe du diaphragme iris et incluant un carter annulaire (2) constitué d'une partie de base (3) avec une partie de couvercle (4) faite pour s'adapter dessus, et ledit carter ayant, adaptées dessus, des lames essentiellement courbes (7, 7') qui sont reliées à pivotement audit carter à l'une de leurs extrémités, et comprenant en outre une bague de réglage (8) ayant des fentes radiales (9) réalisées dessus, fentes dans lesquelles les autres extrémités des lames sont agencées pour se déplacer, grâce à quoi lesdites lames sont rendues entraînables en rotation en continu entre leurs positions fermée et ouverte par la rotation de la bague de réglage,
**caractérisé en ce que**, pour chaque lame (7, 7') devant être installée dans une partie du carter (2), avantageusement la partie de base (3), est formé respectivement un retrait ou une saillie non pénétrants (5'', 5''''), grâce à quoi sur la face de la lame devant être installée en regard de ladite face à retrait ou saillie est formé une saillie ou un retrait (5', 5''') conformé essentiellement de manière complémentaire, grâce à quoi la coopération à pivotement de la paire saillie/retrait permet une rotation libre de la lame autour de son point de pivotement.

2. Un élément de régulation de débit tel que défini dans la revendication 1,
**caractérisé en ce qu'**aux deux extrémités de la lame d'iris (7) sont formés respectivement des saillies ou des retraits (5') mutuellement compatibles, de telle sorte qu'une extrémité de la lame a une saillie tandis que l'autre extrémité a un retrait complémentaire, les saillies/retraits étant en miroir sur l'autre face de la lame.

3. Un élément de régulation de débit tel que défini à la revendication 1 ou 2,
**caractérisé en ce que**, à la fois dans la lame (7) et le carter (2), la saillie est conformée essentiellement hémisphérique tandis que le retrait est de forme complémentaire en correspondance.

4. Un élément de régulation de débit tel que défini dans la revendication 1,
**caractérisé en ce que** les retraits (5'''') faits dans le carter (2) sont conformés plats à leurs fonds et **en ce que** la surface du sommet des saillies (5''') faites sur la lame (7) qui est en regard du fond plat du retrait est plate en correspondance.

5. Un élément de régulation de débit tel que défini dans la revendication 4,
**caractérisé en ce que**, après que la lame (7') soit positionnée, la paire attenante de la saillie (5''') et du retrait (5'''') est pressée au moyen d'un outil spécial pour déformer la paire saillie/retrait en un joint pivotant libre appelé joint « toc-lok » qui attache la lame de manière inséparable à la partie de base, tout en permettant simultanément à la lame de pivoter dans son plan.

6. Un élément de régulation de débit tel que défini dans la revendication 1,
**caractérisé en ce que** le périmètre extérieur de la bague de réglage (8) porte une graduation et les périmètres extérieurs de la partie de base (3) et de la partie de couvercle (4), respectivement, coïncidant avec cette graduation, sont pourvus en correspondance d'une ouverture en fenêtre (14, 15) qui est en un matériau transparent tel qu'un plastique transparent.
